# EUROPÄISCHE PATENTANMELDUNG

(11) **EP 0 930 251 A1**
(43) Veröffentlichungstag der Anmeldung: **21.07.1999**
(21) Anmeldenummer: 98100611.7
(22) Anmeldetag: 15.01.1998
(51) Int. Cl.: B65G 35/00, B24C 3/08

(54) **Vorrichtung und Verfahren zum Fördern und Drehen von Werkstücken**

(71) Anmelder: Guckau, Klaus, 5422 Oberehrendingen (CH)
(72) Erfinder: Guckau, Klaus, 5422 Oberehrendingen (CH)
(74) Vertreter: Blum, Rudolf Emil Ernst

(57) **Zusammenfassung**

Die Vorrichtung besitzt ein Muldenband (5) oder ein Drahtzylinder, welche quer zu einer Förderrichtung (16) bewegt werden und für eine Drehung der Werkstücke (9) sorgen. Zur Förderung der Werkstücke in Förderrichtung (16) ist ein Rüttelförderer (17) vorgesehen. So entsteht ein sehr einfacher Aufbau, der mit Werkstücken beliebiger Grösse einwandfrei arbeitet und es erlaubt, Dreh- und Fördergeschwindigkeit unabhängig voneinander zu wählen. Die Vorrichtung eignet sich insbesondere für Strahl- und Reinigungsanlagen.

## Beschreibung

Die Erfindung betrifft eine Vorrichtung und ein Verfahren zum Fördern und Drehen von Werkstücken gemäss dem Oberbegriff der unabhängigen Ansprüche.

Vorrichtungen dieser Art sind in DE 27 28 960, EP 205 738 und EP 609 661 beschrieben. Sie werden zum Beispiel verwendet, um Werkstücke durch eine Strahl- oder Waschanlage zu führen. Dabei müssen die Werkstücke dauernd gedreht werden, während sie den Bearbeitungsraum durchlaufen. Bei den bekannten Ausführungen wird dies mit einem Muldenband oder einem Drahtzylinder erreicht, welche eine Mulde bilden und sich zum Drehen der Werkstücke quer zur Förderrichtung bewegen. Zur Erzeugung der Förderbewegung sind in DE 27 28 960 Noppen vorgesehen, welche helixförmig auf dem Förderband angeordnet sind. In EP 205 738 und EP 609 661 wird die Längsförderung durch Längsbewegungen der Stäbe des Muldenbandes bzw. der Drähte des Drahtzylinders erzeugt.

Die Lösung nach DE 27 28 960 ist für grosse Werkstücke nicht geeignet und alle bekannten Lösungen sind aufwendig in Herstellung und Wartung.

Es stellt sich deshalb die Aufgabe, eine Vorrichtung bzw. ein Verfahren der eingangs genannten Art bereitzustellen, die einfach in der Herstellung bzw. Wartung sind und die Förderung möglichst beliebiger Werkstücke erlauben. Diese Aufgabe wird vom Gegenstand der unabhängigen Ansprüche gelöst.

Erfindungsgemäss wird der Vorschub in Förderrichtung also durch Rüttelförderung erreicht. Dabei werden die Aufnahmemittel, d.h. diejenigen Teile der Vorrichtung, die die Mulde bilden, in oszillatorische Bewegungen versetzt, die derart gerichtet sind, dass die Werkstücke linear bewegt werden. Die Aufnahmemittel können dabei z. B. ein Muldenband oder ein Drahtzylinder bekannter Ausführung sein.

Die Rüttelförderung eignet sich auch zur Förderung grösserer Werkstücke und ist sehr einfach zu realisieren. Ausserdem erlaubt sie im Gegensatz zu herkömmlichen Methoden eine Trennung von Vorschub und Drehung, d.h. die Drehrate der Werkstücke kann unabhängig von deren Vorschubgeschwindigkeit eingestellt werden.

Vorzugsweise ist zur Aufnahme der Bewegungen des Rüttelförderers ein mit einem Fundament verbundenes Lager vorgesehen, auf welchem die Aufnabmemittel für die Werkstücke auslenkbar montiert sind. In einer besonders einfachen Ausführung trägt das Lager auch den Antrieb zum Drehen der Werkstücke, die Führungen der Aufnahmemittel und den Rüttelförderer, so dass diese Teile eine kompakte Einheit bilden können. Ein allfälliges Gehäuse wird jedoch vorzugsweise nicht mit den vom Rüttelförderer bewegten Teilen verbunden sondern ruht direkt auf dem Fundament.

Die erfindungsgemässe Vorrichtung bzw. das Verfahren eignet sich insbesondere für Strahlanlagen, da nur wenige Komponenten benötigt werden, deren Funktion vom Strahlmittel beeinträchtigt werden könnte. Ebenso eignet sich die Erfindung aber auch für den Einsatz in Waschanlagen, Sprühanlagen, Schälanlagen und andere Anwendungen dieser Art.

Weitere bevorzugte Merkmale und Anwendungen der Erfindung ergeben sich aus den abhängigen Ansprüchen sowie aus der nun folgenden Beschreibung anhand der Figuren. Dabei zeigen:
Figur 1 eine Endansicht einer bevorzugten Ausführung der Erfindung und
Figur 2 eine Seitenansicht der Vorrichtung nach Fig. 1.

Eine bevorzugte Ausführung der Erfindung in Form einer Strahlanlage ist in den Figuren dargestellt. Die Anlage ruht auf einem Fundament 1 und ist von einem gestrichelt gezeichneten Gehäuse 2 umgeben, das ebenfalls direkt auf dem Fundament steht. Der innere Teil der Anlage ist an einem Rahmen 3 aus Stahlrohren montiert, der von vier Federfüssen 4 (oder anderen, eine Auslenkung des Rahmens 3 erlaubenden Elementen) getragen wird.

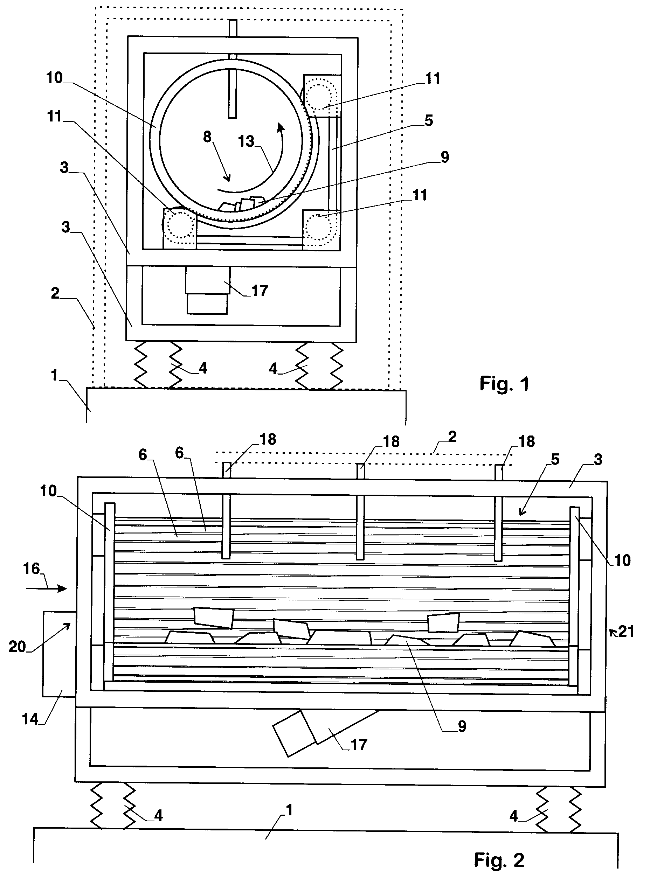

Im Rahmen 3 ist ein Muldenband 5 angeordnet. Dieses Muldenband ist ähnlich ausgeführt wie jenes gemäss DE 27 28 960. Es umfasst mehrere Stäbe 6, die endseitig in flexiblen Bändern zusammengehalten werden. Die Stäbe 6 formen eine Mulde 8, in welcher die zu strahlenden Werkstücke 9 liegen. Der Verlauf des Muldenbands ist am besten aus der endseitigen Ansicht von Fig. 1 ersichtlich. Im Bereich der Mulde 8 wird das Muldenband von Führungsringen 10 geführt und folgt einem im wesentlichen zylinderförmigen Verlauf. Aussen wird es über Umlenkrollen 11 umgelenkt und zurückgeführt. Die Bewegungsrichtung des Muldenbands entspricht jener des Pfeils 13. Zum Antrieb des Muldenbands ist ein Antriebsaggregat 14 vorgesehen, welches am Rahmen 3 montiert ist.

Im Betrieb werden die Werkstücke 9 durch die Bewegung des Muldenbands die steile Wand der Mulde 8 hochgeführt, bis sie den Halt verlieren und herunterrollen. Dies bewirkt eine Drehung der Werkstücke.

Zum Fördern der Werkstücke in Förderrichtung 16 (Fig. 2) ist am Rahmen 3 ein Rüttelförderer 17 montiert. Dieser versetzt den ganzen Rahmen und die daran befestigten Teile in Vibration, welche bewirkt, dass die Werkstücke 9 in Förderrichtung 16 bewegt werden. Rüttelförderer sind dem Fachmann in verschiedenen Ausführungen bekannt und brauchen hier nicht im Detail beschrieben zu werden. In der Regel besitzen sie eine Masse, welche von einem geeigneten Antrieb hin- und herbewegt oder in exzentrische Drehbewegung versetzt wird, wodurch die gewünschte Rüttelbewegung erzeugt wird.

Im Betrieb führt also der ganze Rahmen 3 und insbesondere das Muldenband 5 eine Rüttelbewegung aus. Diese Bewegung fördert die Werkstücke 9. Sie wird von den Federfüssen 4 aufgefangen. Das Gehäuse 2 bleibt in Ruhe, weil es direkt auf dem Fundament 1 steht.

Die vorliegende Strahlanlage besitzt mehrere Strahldüsen 18 (und/oder Schleuderräder), welche am Gehäuse 2 montiert sind und ein geeignetes Strahlmittel auf die Werkstücke 9 in der Mulde 8 strahlen. Die Werkstücke 9 werden dabei im wesentlichen kontinuierlich gedreht und gefördert, wobei durch die Eingangsöffnung 20 der Mulde ständig neue Werkstücke zugeführt werden, während gestrahlte Teile den Strahlraum durch die Ausgangsöffnung 21 verlassen.

In der vorliegenden Anlage sind zur Drehung und zur Förderung der Werkstücke also zwei unabhängige Antriebsmechanismen vorgesehen, so dass das Verhältnis von Dreh- und Vorschubgeschwindigkeit den jeweiligen Anforderungen in weiten Bereichen angepasst werden kann.

Das Muldenband 5, welches in der hier beschriebenen Ausführung verwendet wird, trägt die Werkstücke 9 und bewegt sie im wesentlichen senkrecht zur Förderrichtung 16. Anstelle des Muldenbandes kann auch ein anderes Aufnabmemittel für die Werkstücke verwendet werden, wie z. B. ein Drahtzylinder, wie er in EP 205 738 beschrieben wird, wobei jedoch die Abschlussringe nicht schräg gestellt sein müssen.

Die Längsförderung wird in der vorliegenden Ausführung ausschliesslich durch Rüttelförderung erreicht. Es ist allerdings auch denkbar, dass die Wirkung des Rüttelförderers durch weitere Massnahmen, wie z. B. eine Schrägstellung der Anlage oder durch bekannte Fördermechanismen unterstützt wird.

Dank seiner Einfachheit und Robustheit ist der Rüttelförderer 17 insbesondere für Strahlanlagen und ähnliche Vorrichtungen, bei denen mit starker mechanischer Abnutzung der Teile gerechnet werden muss, besonders geeignet. Die Konstruktion des Muldenbandes kann sehr einfach bleiben, was die Betriebskosten senkt, da dieses regelmässig gewartet bzw. gewechselt werden muss.

## Patentansprüche

1. Vorrichtung zum Fördern von Werkstücken in eine Förderrichtung (16) und zum gleichzeitigen Drehen der Werkstücke mit Aufnahmemitteln (5) zur Aufnahme der Werkstücke, welche eine sich in Förderrichtung (16) erstreckende Mulde (8) bilden und die zum Drehen der Werkstücke im wesentlichen quer zur Förderrichtung (16) angetrieben sind, und mit Fördermitteln zum Fördern der Werkstücke in Förderrichtung (16), dadurch gekennzeichnet, dass die Fördermittel einen Rüttelförderer (17) aufweisen, der auf die Aufnahmemittel (5) wirkt.

2. Vorrichtung nach Anspruch 1, dadurch gekennzeichnet, dass zur Aufnahme der Bewegungen des Rüttelförderers (17) ein auslenkbar mit einem Fundament (1) verbundenes Lager (4) vorgesehen ist, welches die Aufnahmemittel (5) trägt.

3. Vorrichtung nach Anspruch 2, dadurch gekennzeichnet, dass das Lager (4) weiter eine Führung (10) der Aufnahmemittel (5) einen Antrieb (14) zum Drehen der Werkstücke und den Rüttelförderer (17) trägt.

4. Vorrichtung nach einem der Ansprüche 2 oder 3, dadurch gekennzeichnet, dass sie ein die Aufnahmemittel umschliessendes Gehäuse (2) aufweist, welches auf dem Fundament (1) ruht und im wesentlichen keine mechanische Verbindung mit vom Rüttelförderer (17) bewegten Teilen aufweist.

5. Vorrichtung nach einem der vorangehenden Ansprüche, dadurch gekennzeichnet, dass die Aufnahmemittel (5) von einem Muldenförderband gebildet werden.

6. Strahlanlage zum Strahlen von Werkstücken mit einer Vorrichtung zum Fördern und gleichzeitigem Drehen der Werkstücke nach einem der vorangehenden Ansprüche.

7. Verfahren zum Fördern und gleichzeitigen Drehen von Werkstücken (9), bei welchem die Werkstücke in einer Mulde (8) mit mindestens einer Seitenwand die Seitenwand hochgeführt werden, bis sie abrollen und gleichzeitig in Längsrichtung der Mulde gefördert werden, dadurch gekennzeichnet, dass die Förderung in Längsrichtung der Mulde durch Rüttelförderung geschieht.
